# EUROPEAN PATENT APPLICATION

(11) **EP 4 335 326 A1**
(43) Date of publication of application: **13.03.2024**
(21) Application number: 23196178.0
(22) Date of filing: 08.09.2023
(51) Int. Cl.: A47C 21/02, F16G 11/10, F16G 11/14

(54) **HOLDING DEVICE**

(30) Priority: 08.09.2022 IT 202200018291
(71) Applicant: Coan, Riccardo, 33077 Sacile (PN) (IT)
(72) Inventor: Coan, Riccardo, 33077 Sacile (PN) (IT)
(74) Representative: Petraz, Gilberto Luigi

(57) **Abstract**

Holding device (10) for at least one flexible object, comprising a flexible connection member (11) and holding means (14), comprising an abutment element (24) and a mobile cursor (26), sliding along the connection member (11) moving away from/close to each other.

## Description

### FIELD OF THE INVENTION

The present invention concerns a holding device for flexible objects and a related method of use.

By way of example but not limitation, said flexible objects can be plastic or textile sheets, such as towels, tea towels, blankets, sail awnings for shade or the like, and similar. In particular, the present invention can be advantageously used for the coupling of a duvet, or bed cover, with a respective duvet cover, or pillowcase.

The present invention can be applied in contexts such as the domestic environment, the hotel sector, hospitals, nursing homes, homes for the elderly and military accommodation.

### BACKGROUND OF THE INVENTION

The need to temporarily retain one or more heads of a flexible object is known; for example, it may be necessary to hang a towel on a hook or temporarily secure a sail cloth. In order to obtain a reliable holding, the flexible object must be provided with a holding element, for example a ring or an eyelet, or it is necessary to provide this by means of an external holding means, such as a clamp or magnetic buttons, provided with a ring or an eyelet. However, these holding devices can damage the flexible object, for example the teeth of the clamp can tear it or the securing may not be strong enough.

The difficulty in holding a duvet cover in the correct position during its insertion in a respective duvet cover is also known, in particular when it is a double duvet and the insertion is carried out by a single person.

There is therefore the need to perfect a holding device for flexible objects that can overcome at least one of the disadvantages of the state of the art.

To do this it is necessary to solve the technical problem of reliably constraining the flexible object with the holding device without damaging it.

In particular, an object of the present invention is to provide a holding device for flexible objects that guarantees a sufficiently strong attachment.

Another purpose of the present invention is to realise a holding device for flexible objects that is easy to use.

Another purpose of the present invention is to devise a method of using the holding device for flexible objects according to the invention.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, and to resolve the technical problem disclosed above in a new and original way, also achieving considerable advantages compared to the state of the prior art, a holding device for flexible objects according to the present invention comprises a flexible connection member, an abutment element, and a mobile cursor.

The abutment element and the mobile cursor can slide along the connection member moving away from/close to each other; they are also configured to cooperate with each other by creating a sliding eyelet on the connection member for holding, at least temporarily, the at least one flexible object.

This at least obtains the advantage of making it easy and convenient to insert the flexible object into the holding device, while allowing it to be reliably retained by adjusting the force necessary to tighten the holding eyelet.

In accordance with another aspect of the present invention, the connection member has a first end and an opposite second end; the abutment element and the mobile cursor are located at the second end.

In accordance with another aspect of the present invention, the connection member is a cord element, curved on itself in a bending zone on an axis perpendicular to its longitudinal development; the second end corresponds at least to the part of the cord element comprised between the abutment element and the mobile cursor.

In accordance with another aspect of the present invention, the abutment element comprises holding means. The holding means retains the connection member in its bending zone.

In accordance with another aspect of the present invention, the abutment element comprises sliding means to allow it to slide along the connection member and adjust the width of the eyelet.

In accordance with another aspect of the present invention, the abutment element has a shape without edges, selected from a sphere, ovoid or soap-like shape.

In accordance with another aspect of the present invention, the mobile cursor includes sliding means to allow it to slide along the connection member and adjust the width of the eyelet.

In accordance with another aspect of the present invention, the holding means and sliding means of the abutment element and the sliding means of the mobile cursor are respective through holes crossed by the connection member.

The through hole of the abutment element is configured with an elbow shape, for example with a bending angle of 45° to 120°.

The through hole of the mobile cursor is configured with an elbow shape, for example with a bending angle of substantially 90°.

In accordance with another aspect of the present invention, the overall dimensions of the abutment element are from 10 to 50 mm, preferably from 15 to 40 mm, even more preferably from 20 to 30 mm; the mobile cursor has a thickness from 10 to 40 mm, preferably from 15 to 35 mm, even more preferably from 20 to 30 mm, a height from 20 to 300 mm, preferably from 30 to 80 mm, even more preferably from 50 to 70 mm and a width from 10 to 80 mm, preferably from 20 to 70 mm, even more preferably from 50 to 60 mm.

In accordance with another aspect of the present invention, the method of using the holding device for at least one flexible object includes:
- sliding the mobile cursor and the abutment element along the flexible connection member to allow them to move reciprocally away from each other, enlarging a sliding eyelet for holding the at least one flexible object;
- inserting the at least one flexible object into the eyelet; and
- moving the mobile cursor close to the abutment element, by sliding it along the connection member, until the at least one flexible object is held in a stable manner.

### DESCRIPTION OF THE DRAWINGS

These and other aspects, features and advantages of the present invention will become clear from the following disclosure of some embodiments, provided merely by way of non-limiting example, with reference to the accompanying drawings in which:
- fig. 1 is a three-dimensional view of a holding device for flexible objects, according to the present invention;
- fig. 2 is a rear view of the holding device for flexible objects of fig. 1;
- fig. 3 is a side view of the holding device for flexible objects of fig. 1;
- fig. 4 is a view from above of the holding device for flexible objects of fig. 1;
- fig. 5 is a three-dimensional view of a holding device for flexible objects according to the present invention, in accordance with another embodiment;
- fig. 6 is a side view of a detail of the holding device for flexible objects of fig. 1;
- fig. 7 is a view from above of the detail of fig. 6;
- fig. 8 is a rear view of the detail of fig. 6;
- fig. 9 is a view from below of the detail of fig. 6;
- fig. 10 is a cross sectional view of the detail of fig. 9, along the section line X-X;
- fig. 11 is a view of a detail of the holding device for flexible objects according to the present invention, in accordance with another embodiment;
- fig. 12 is a view from above of another detail of the holding device for flexible objects of fig. 1;
- fig. 13 is a front view of the detail of fig. 12;
- fig. 14 is a cross sectional view of the detail of fig. 13, along the section line XIV-XIV;
- fig. 15 is a representation of a holding device for flexible objects of fig. 1 in a condition of use;
- fig. 16 is a representation of a pair of holding devices for flexible objects of fig. 1 in a rest condition.

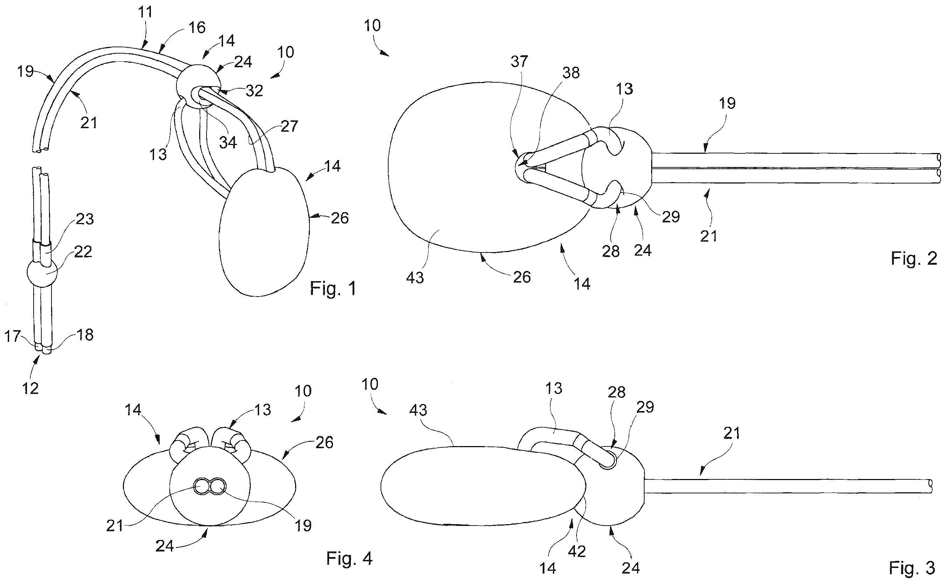

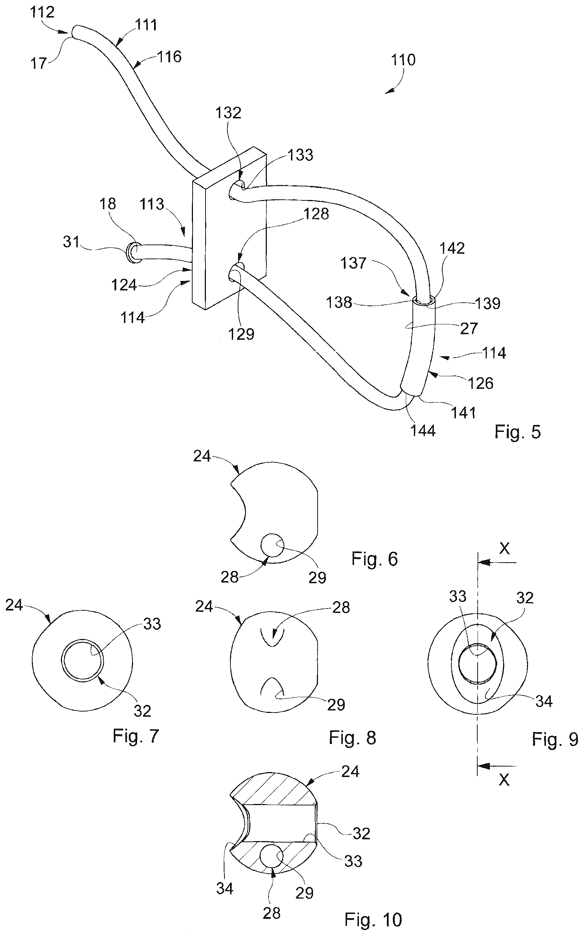

In the present description, the phraseology and terminology used, such as for example the terms "from above", "from below", "rear", "front", "side", "upper" and "lower", with their declensions, have the sole function of better illustrating the present invention with reference to the attached drawings, in particular figures 1 and 5, and should not be used in any way to limit the scope of the invention itself, or the scope of protection defined by the appended claims.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

With reference to fig. 1, a holding device 10 for flexible objects 300 according to the present invention comprises a flexible connection member 11, in the form of a cable, having a first end 12 and an opposite second end 13, at which the device 10 is provided with holding means 14.

The connection member 11 is a cord element 16, such as a textile cord, a plastic cord, a metal wire or a combination thereof.

Preferably, the cord element 16 is curved in on itself on an axis perpendicular to its longitudinal development. The second end 13 therefore corresponds to the part of the cord element 16 in the bending zone and in its vicinity.

The first end 12 corresponds to the two terminal heads 17, 18 of the cord element 16, where the term "terminal head" means the final part of the cord element 16. The connection member 11, or cable, is therefore made up of a double cord, which has two cord sections 19, 21.

The connection member 11 can comprise a joining element 22, for example a knot, which securely joins the two cord sections 19, 21, in a part thereof external to the second end 13. The device 10 may comprise a sheath 23, for example a sheath of heat-shrinking material, a tubular ribbon or the like, for joining and possibly at the same time covering part of the two cord sections 19, 21.

With reference to fig. 5, according to a second embodiment, a second holding device 110 for flexible objects 300 according to the present invention is described. In the present description and the appended claims, identical common elements among the described embodiments will have the same number, elements that are not the same but correspond to one another will have a corresponding number increased by 100.

The connection member 111 of the device 110 is a single cord element 116, wherein the first end 112 corresponds to a terminal head 17 of the cord element 116 and the second end 113 corresponds to the part of the cord element 116 in and near the other terminal head 18. At the second end 113, the device 110 is provided with holding means 114.

In the exemplary and non-exhaustive case that the device 10, 110 is used to facilitate the insertion of a duvet 301 inside a duvet cover 302, the first end 12, 112 is configured to be secured to a support, in particular secured to the structure of the bed, and at the second end 13, 113 are the holding means 14, 114. In this case, the holding means 14, 114 are configured to temporarily make the respective corners of the duvet 301 and duvet cover 302 integral with each other.

According to other application examples, the first end 12, 112 can be suitably secured, for example knotted, to a support of the flexible object 300, such as a hook for a towel or a pole for a sail awning.

The holding means 14, 114 comprise an abutment element 24, 124 and a mobile cursor 26, 126. The mobile cursor 26, 126 can slide along the connection member 11 moving away from/close to the abutment element 24, 124.

The abutment element 24, 124 and the mobile cursor 26, 126, cooperating with each other, create a sliding eyelet 27 on the connection member 11, 111 for holding, in which at least a part of the flexible object 300 can be inserted and clamped, at least temporarily.

The abutment element 24, 124 may have a shape without edges, e.g., a sphere, ovoid, soap-like shape, or a shape with edges, e.g., a parallelepiped shape (fig. 5) or the like and similar. If the aforementioned shape is a shape without edges, it advantageously avoids roughness that can annoy or injure a user and/or damage the flexible object 300.

The overall dimensions of the abutment element 24, 124 can be between 10 and 50 mm, preferably between 15 and 40 mm, even more preferably between 20 and 30 mm.

The abutment element 24, 124 comprises holding means 28, 128 for the connection member 11, 111 at the second end 13, 113.

By way of example and as shown in figures 2, 5, 6, 8 and 10, the holding means 28, 128 is a through hole 29, 129 for holding, in which the cord element 16, 116 is passed.

The dimensions of the through hole 29, 129 may be from 1 to 10 mm, preferably from 2 to 8 mm, even more preferably from 4 to 7 mm.

In the embodiment shown in Figures 2, 6, 8 and 10, the cord element 16 is curved at the through hole 29, thus forming the aforementioned bending zone.

In the example shown in fig. 5, the second end 113 comprises an abutment element 31, which prevents the terminal head 18 from passing through the through hole 129 and therefore the abutment element 124 from moving away from, or separating from, the connection member 111. According to embodiments not shown in the figures, the terminal head can also be embedded, or incorporated, and then fixed irreversibly and immovably, in the abutment element.

The abutment element 24, 124 comprises the aforementioned sliding means 32, 132 to allow the abutment element 24, 124 to slide along the connection member 11, 111 and the width of the eyelet 27 to be adjusted.

By way of example, as in figs. 1, 5, 7, 9 and 10, the sliding means 32, 132 are a through hole 33, 133 in which the connection member 11, 111 is passed. In particular, if the connection member 11 is a double cord, the through hole 33 is crossed by both cord sections 19, 21.

The through hole 33 passes through the abutment element 24 in a central axis thereof. This ensures that the abutment element 24 has a high strength while maintaining a small overall size.

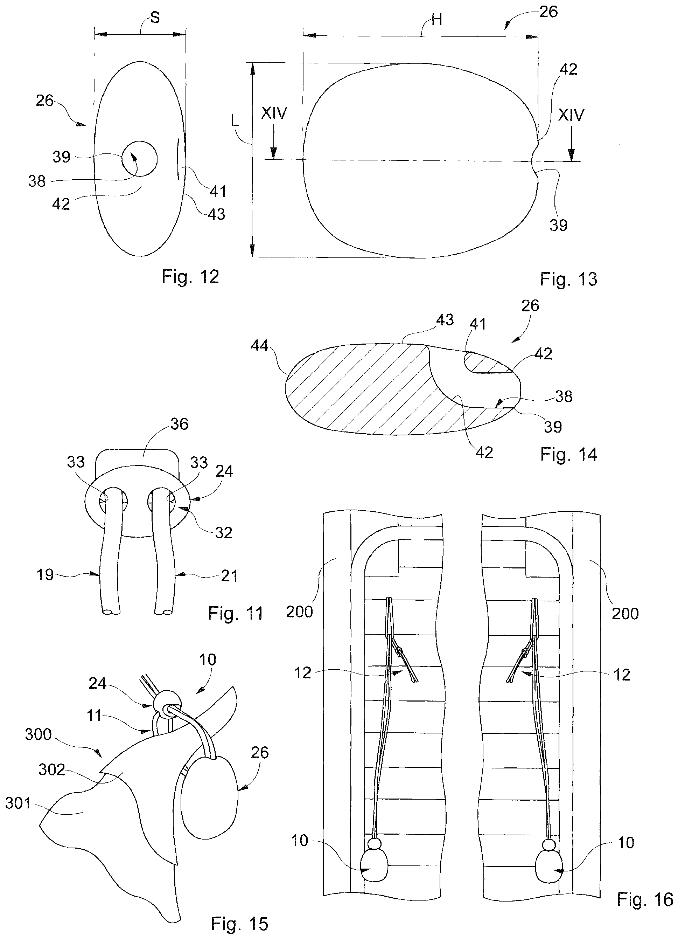

According to another example shown in fig. 11, the sliding means 32 comprise two through holes 33, into each of which a respective section of cord 19, 21 is passed.

The through hole(s) 33 is/are configured with a substantially straight shape or only slightly bent at the elbow.

The dimensions of said hole 33 can be between 2 and 10 mm, preferably between 4 and 10 mm, even more preferably between 6 and 10 mm.

As shown in figs. 1 and 9, the through hole 33 can have, in at least one of its ends 34 at the outer surface of the abutment element 24, a countersunk shape. Advantageously, the countersunk shape of the end 34 can help to direct the connection member 11 towards the through hole 33.

The countersunk shape of the end 34 may be a shape matched to a part of the mobile cursor 26 (fig. 3), in particular to an upper side 42 of the mobile cursor 26. The abutment element 24 and the mobile cursor 26 can therefore assume a compact configuration.

The sliding means 32, 132 may have a surface adapted to restrain the movement of the connection member 11, 111, e.g., a coarse, rough, knurled or similar surface. In this way the movement of the connection member 11, 111 can be allowed only when desired by a user of the device 10, 110, who must apply a sufficient force. Advantageously, it is thus avoided that the device 10, 110 can unintentionally release the flexible object 300.

Additionally or alternatively, the sliding means 32 can comprise a release mechanism 36 (fig. 11), for example with a return spring, to allow or prevent the movement of the connection member 11 through the sliding means 32.

The mobile cursor 26, 126 may have a shape without edges, for example, a sphere, ovoid or soap-like shape, or a shape with edges, for example, a parallelepiped shape, a tubular shape (fig. 5) or the like and similar. Advantageously, a shape without edges can facilitate the user's grip during use.

Advantageously, the mobile cursor 26, 126 facilitates the user in widening/narrowing the eyelet 27, as it is easier to act on the latter when moving away from/towards the abutment element 24, 124 compared to having to act on the connection member 11, 111. For example, in the event that there is no flexible object 300 and the device is in a closed configuration, in which the eyelet 27 assumes its minimum size, it may be difficult for a user to insert their fingers between the connection member 11, 111 and the abutment element 24, 124 to bring the device 10, 110 into an open configuration, in which the eyelet 27 assumes an opening such as to allow the insertion of at least one head of the flexible object 300.

The overall dimension of the mobile cursor 26 in its direction of minimum development, for example in the direction of its thickness S (fig. 12) can be between 10 and 40 mm, preferably between 15 and 35 mm, even more preferably between 20 and 30 mm.

The height H of the mobile cursor 26 (fig. 13) may be from 20 to 300 mm, preferably from 30 to 80 mm, even more preferably from 50 to 70 mm.

The width L of the mobile cursor 26 (fig. 13) may be from 10 to 80 mm, preferably from 20 to 70 mm, even more preferably from 50 to 60 mm.

The mobile cursor 26, 126 comprises sliding means 37, 137 for allowing the mobile cursor 26, 126 to slide along the connection member 11, 111 and the eyelet 27 to be adjusted.

By way of example and as shown in figs. 1, 5, 2, 12 and 14, the sliding means 37, 137 are a through hole 38, 138 into which the connection member 11, 111 can pass.

In the event that the connection member 11 is a double cord, the through hole 38 is crossed by both cord sections 19, 21.

The size of the through hole 38 may range from 1/4 to 1/2 of the thickness S, preferably from 1/3 to 1/2.

The through hole 38 has a first end 39 and a second end 41 (fig. 12).

The first end 39 is placed on the aforementioned upper side 42 of the mobile cursor 26; in particular, it can be placed centrally on the upper side 42.

The second end 41 is located on a rear side 43 of the mobile cursor 26. In particular, the second end 41 is located in the middle of the rear side 43 positioned towards the upper side 42. Advantageously, the lower half of the mobile cursor 26 remains free from the connection member 11, facilitating the gripping of the mobile cursor 26 by the user.

The through hole 38 is configured with an elbow shape, for example with a bending angle of substantially 90°.

According to the alternative embodiment shown in fig. 5, the tubular-shaped mobile cursor 126 has a through hole 138 having a first end 139 located on the upper side 142 of the mobile cursor 126 and a second end 141 located on a lower side 144 of the mobile cursor 126.

The operation of the holding device 10, 110 described so far, which corresponds to the method according to the present invention comprises the following steps:
- sliding the mobile cursor 26, 126 and the abutment element 24, 124 along the flexible connection member 11, 111 to allow them to be reciprocally distanced from one another, in order to widen the holding eyelet 27;
- inserting at least one flexible object 300 into the eyelet 27; and
- moving the mobile cursor 26, 126 close to the abutment element 24, 124, by sliding them along the connection member 11, 111, until the at least one flexible object 300 is stably held.

The method therefore provides for re-widening the eyelet 27, when it is necessary to release the flexible object 300 from the device 10, 110.

The method provides that, to move the mobile cursor 26, 126 away from the abutment element 24, 124, the user grasps the mobile cursor 26, 126 and the abutment element 24, 124 by exerting a traction on them.

The method provides that, to move the mobile cursor 26, 126 closer to the abutment element 24, 124, the user grasps the connection member 11, 111 and one of either the mobile cursor 26, 126 or the abutment element 24, 124, preferably the mobile cursor 26, 126, and exerts a traction on the connection member 11, 111.

The method provides for securing the device 10, 110 to a support of the flexible object 300, in particular for securing its first end 12, 112 to the support.

In the exemplary and non-exhaustive case that the device 10, 110 is used to facilitate the insertion of a duvet 301 inside a duvet cover 302, the method of use provides for securing two devices 10, 110 to the structure of the bed, for example one at each side of the structure of the bed on the side of the headboard.

In particular, the method provides for securing the first end 12, 112 of each device 10, 110 to the structure of the bed, for example to the slats 200 (fig. 16).

When the devices 10, 110 are not in use, and are therefore in a rest configuration, they may remain hidden between the slats 200 and the mattress.

During use, the method is to take the second ends 13, 113, with the relative holding means 14, 114 and insert a corner of the duvet cover 302 with the relative part of the duvet 301 into each device 10, 110, as described above.

The method provides for adjusting the duvet cover 302 on the duvet 301 by acting on the two free corners of the bottom of the duvet cover 302/duvet 301, or in general on any other part thereof.

The method involves freeing the corners of the duvet cover 302/duvet 301 and repositioning the devices 10 between the slats 200 and the mattress.

During the construction of the device 10, 110, for its assembly, one of the terminal heads 17, 18 of the connection member 11, 111 is made to cooperate with the sliding means 32, 132 of the abutment element 24, 124, then with the sliding means 37, 137 of the mobile cursor 26, 126 and finally with the holding means 28, 128 of the abutment element 24, 124.

Possibly, if the connection member 11 is a double cord element 16, one of the terminal heads 17, 18 is subsequently made to cooperate again with the sliding means 37 of the mobile cursor 26 and therefore with the sliding means 32 of the abutment element 24.

For example, one of the terminal heads 17, 18 is passed, in succession, into the through hole 33 of the abutment element 24, then into the through hole 38 of the mobile cursor 26, into the through hole 29 for holding the abutment element 24 and again, by a reverse path, into the through hole 38 of the mobile cursor 26 and finally into the through hole 33 of the abutment element 24.

It is clear that modifications and/or additions of parts may be made to the holding device 10, 110 and to the method as described heretofore, without departing from the field and scope of the present invention, as defined by the claims.

It is also clear that, although the present invention has been described with reference to some specific examples, a person of skill in the art shall certainly be able to achieve other equivalent forms of a holding device for flexible objects and related method of use, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Holding device (10, 110) for at least one flexible object (300), **characterized in that** it comprises a flexible connection member (11, 111), an abutment element (24, 124) and a mobile cursor (26, 126) both sliding along said connection member (11, 111) moving away from/close to each other, configured to cooperate with each other determining on said connection member (11, 111) a sliding eyelet (27, 127) for the temporary hold of said at least one flexible object (300).

2. Device (10, 110) as in claim 1, **characterized in that** said connection member (11, 111) has a first end (12, 112) and an opposite second end (13, 113) in correspondence with which said abutment element (24, 124) and mobile cursor (26, 126) are located.

3. Device (10) as in claim 2, **characterized in that** said connection member (11) is a cord element (16) curved on itself in a bending zone on an axis perpendicular to its longitudinal development **and in that** said second end (13) corresponds at least to the part of the cord element (16) comprised between said abutment element (24) and mobile cursor (26).

4. Device (10, 110) as in any claim hereinbefore, **characterized in that** said abutment element (24, 124) comprises holding means (28, 128) for holding said connection member (11, 111).

5. Device (10, 110) as in any claim hereinbefore, **characterized in that** said abutment element (24, 124) comprises sliding means (32, 132) to allow it to slide along said connection member (11, 111) and to adjust the width of said eyelet (27).

6. Device (10) as in any claim hereinbefore, **characterized in that** said abutment element (24) has a shape without edges chosen from a sphere, an ovoid or a bar of soap-like shape.

7. Device (10, 110) as in any claim hereinbefore, **characterized in that** said mobile cursor (26, 126) comprises sliding means (37, 137) to allow it to slide along said connection member (11, 111) and to adjust the width of said eyelet (27).

8. Device (10, 110) as in claim 7, **characterized in that** said holding (28, 128) and sliding (32,132) means of said abutment element (24, 134) and said sliding means (37, 137) of said mobile cursor (26, 126) are respective through holes (29, 129, 33, 133, 38, 138) which said connection member (11, 111) passes through.

9. Device (10) as in any claim hereinbefore, **characterized in that** the overall sizes of said abutment element (24) are comprised between 10 and 50 mm, preferably between 15 and 40 mm, even more preferably between 20 and 30 mm, **and in that** said mobile cursor (26) has a thickness (S) comprised between 10 and 40 mm, preferably between 15 and 35 mm, even more preferably between 20 and 30 mm, a height (H) comprised between 20 and 300 mm, preferably between 30 and 80 mm, even more preferably between 50 and 70 mm, and a width (L) comprised between 10 and 80 mm, preferably between 20 and 70 mm, even more preferably between 50 and 60 mm.

10. Method for using a holding device (10, 110) for at least one flexible object (300), **characterized in that** it provides to:
- make a mobile cursor (26, 126) and an abutment element (24, 124) slide along a flexible connection member (11, 111) to allow them to move reciprocally away from each other in order to widen a sliding eyelet (27) that holds said at least one flexible object (300);
- insert said at least one flexible object (300) in said eyelet (27); and
- move said mobile cursor (26, 126) close to said abutment element (24, 124), by means of their sliding along said connection member (11, 111), until said at least one flexible object (300) is held in a stable manner.
